(19) Europäisches Patentamt
European Patent Office
Office européen des brevets

(11) **EP 4 185 486 B1**

(12) **EUROPÄISCHE PATENTSCHRIFT**

(45) Veröffentlichungstag und Bekanntmachung des Hinweises auf die Patenterteilung:
**19.03.2025 Patentblatt 2025/12**

(21) Anmeldenummer: **21748598.6**

(22) Anmeldetag: **21.07.2021**

(51) Internationale Patentklassifikation (IPC):
**B60K 28/08** *(2006.01)* **B60W 30/02** *(2012.01)*
**B60W 40/13** *(2012.01)*

(52) Gemeinsame Patentklassifikation (CPC):
**B60P 7/06; B60K 28/08; B60W 40/13;**
**G01G 19/086;** B60W 2520/105; B60W 2520/125

(86) Internationale Anmeldenummer:
**PCT/EP2021/070399**

(87) Internationale Veröffentlichungsnummer:
**WO 2022/018142 (27.01.2022 Gazette 2022/04)**

(54) **ERKENNUNG UNGESICHERTER LADUNG BEI AUTOMATISIERT BETRIEBENEN FAHRZEUGEN**

DETECTION OF AN UNSECURED LOAD IN AUTONOMOUS VEHICLES

DÉTECTION D'UNE CARGAISON NON SÉCURISÉE DANS UN VÉHICULE AUTONOME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2020 DE 102020209231**

(43) Veröffentlichungstag der Anmeldung:
**31.05.2023 Patentblatt 2023/22**

(73) Patentinhaber: **Robert Bosch GmbH**
**70442 Stuttgart (DE)**

(72) Erfinder:
- **SELLHUSEN, Stefan**
  **71229 Leonberg (DE)**
- **WERNER, Roland**
  **71069 Sindelfingen (DE)**
- **DOERR, Christoph**
  **50858 Koeln (DE)**
- **DUMAS, Florian**
  **71083 Herrenberg (DE)**

(56) Entgegenhaltungen:
WO-A1-2014/133436          DE-A1- 102014 226 108
DE-A1- 102017 212 596          DE-A1- 102018 115 615
US-B2- 8 786 437

EP 4 185 486 B1

## Beschreibung

Die Erfindung betrifft ein Verfahren zum Erkennen einer ungesicherten Ladung in einem, insbesondere automatisiert betreibbaren, Fahrzeug. Des Weiteren betrifft die Erfindung ein Steuergerät, ein Computerprogramm sowie ein maschinenlesbares Speichermedium.

Stand der Technik

Bei dem Transport von Ladungen in Fahrzeugen ist eine ordnungsgemäße Sicherung der Ladung essenziell für die Verkehrssicherheit. Bei manuellen bzw. durch Fahrer gesteuerten Fahrzeugen erfolgt die Ladungssicherung durch den Fahrer. Dabei übernimmt der Fahrer die Aufgabe der Ladungssicherung und der Überwachung des Fahrzeugs im Hinblick auf eine lose Ladung. Insbesondere bei vollautomatisiert betriebenen Fahrzeugen ist jedoch kein Fahrer vorhanden, welcher die Ladungssicherung und -überwachung übernehmen kann.

Es sind bereits Verfahren zum Erkennen einer ungesicherten Ladung bekannt, welche einen Schwerpunkt der Ladung ermitteln und zeitlich nachverfolgen. Dabei kann festgestellt werden, ob der Schwerpunkt der Ladung sich mit der Zeit verändert und die Ladung sich somit innerhalb eines Laderaums verschiebt. Ein derartiges Verfahren kann insbesondere bei LKW-Anhängern oder bei Containern eingesetzt werden. Die Lage des Schwerpunkts kann über eine Verschränkung oder über unterschiedliche Belastungen der Räder ermittelt werden. Eine derartige Erkennung einer ungesicherten Ladung erfordert jedoch eine deutliche Verschiebung der Ladung innerhalb des Laderaums. Eine geringfügige Verschiebung der Ladung kann dabei nur unzureichend erkannt werden.

Aus der DE 10 2014 226108 A1 ist ein Verfahren zum Erkennen einer ungesicherten Ladung in einem Kraftfahrzeug bekannt, wobei durch eine Überwachungsvorrichtung in einem ersten Messzyklus vor oder während einer Fahrt des Kraftfahrzeugs mittels einer Lageerfassungseinrichtung ein erster mit einer Lage der Ladung im Kraftfahrzeug korrelierender Lagedatensatz ermittelt wird und in einem späteren zweiten Messzyklus während der Fahrt mittels der Lageerfassungseinrichtung ein zweiter mit der Lage der Ladung korrelierender Lagedatensatz ermittelt wird. Es wird ein Unterschied zwischen dem ersten Lagedatensatz und dem zweiten Lagedatensatz ermittelt und, falls der ermittelte Unterschied ein vorbestimmtes Auslösekriterium erfüllt, eine vorbestimmte Sicherungsmaßnahme eingeleitet.

Weiterer Stand der Technik wird in der DE 10 2017 212596 A1, DE 10 2018 115615 A1 und der US 8 786 437 B2 offenbart.

Offenbarung der Erfindung

Die der Erfindung zugrunde liegende Aufgabe kann darin gesehen werden, ein Verfahren zum präzisen Erkennen einer Bewegung eines Transportguts vorzuschlagen, welches durch ein automatisiert betriebenes Fahrzeug transportiert wird.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Erkennen einer ungesicherten Ladung in einem Fahrzeug. Das Fahrzeug kann vorzugsweise als ein vollautomatisiert betreibbares Fahrzeug ausgestaltet sein. Zum Durchführen des Verfahrens kann ein Steuergerät eingesetzt werden, welches fahrzeugseitig oder fahrzeugextern angeordnet sein kann.

In einem Schritt werden von mindestens einem Beschleunigungssensor ermittelte Messdaten in Form von Querbeschleunigungen und/oder Längsbeschleunigungen empfangen. Dabei werden Beschleunigungsdaten vom Fahrzeug ermittelt.

Im Rahmen einer anschließenden Auswertung der Messdaten des Beschleunigungssensors wird geprüft, ob ein Grenzwert durch die gemessenen Querbeschleunigungen oder Längsbeschleunigungen überschritten wird. Bei einer festgestellten Überschreitung des Grenzwerts wird ein Zeitintervall zum Erkennen der ungesicherten Ladung gestartet. Das Zeitintervall kann dabei unmittelbar oder mit einem zeitversetzt eingeleitet werden.

Anschließend werden während des gestarteten Zeitintervalls von mindestens einem Sensor ermittelte Messdaten empfangen und Ableitungen der empfangenen Messdaten nach der Zeit berechnet.

Überschreitet beispielsweise die Ableitungen der empfangenen Messdaten nach der Zeit einen Schwellwert, so wird ein Ereignis gezählt. Eine ungesicherte Ladung wird erkannt, wenn eine Mindestanzahl von gezählten Ereignissen erreicht wird, welche während des gestarteten Zeitintervalls gezählt werden.

Durch das Verfahren kann eine zuverlässige und sensitive Erkennung einer gelösten Ladung bei automatisiert betriebenen Fahrzeugen durchgeführt werden. Dabei können einzelne Fehldetektion, welche beispielsweise durch einzelne Schlaglöcher verursacht werden können, vermieden werden. Das Messen von kinetischen Impulsen einer Ladung während eines definierten Zeitraums bzw. des Zeitintervalls verhindert somit falsch positive Ergebnisse.

Die Messdaten eines Beschleunigungssensors können hierbei als initiale Auslöser für einen Bedarf der Überprüfung der Ladungssicherung verwendet werden.

Die Erkennung der Ereignisse während des Zeitintervalls ist nicht mehr auf die Messdaten des Beschleunigungssensors beschränkt. Dabei können unterschiedlichen Sensoren, wie beispielsweise Mikrofone, Wegsensoren des Fahrgestells, Sensoren einer Luftfederung und dergleichen eingesetzt werden, um Ereignisse währendes Zeitintervall zu ermitteln. Während des aktivierten Zeitintervalls werden die Ableitungen der empfangenen Messdaten nach der Zeit herangezogen, um Ereignisse auszulösen und zu zählen. Die Ableitungen der Messdaten nach der Zeit stellen hierbei die Differenzen zwischen den Messdaten von zwei aufeinanderfolgenden Zeitpunkten und entsprechen einer Tangentensteigung der gegen die Zeit in einem Diagramm aufgezeichneten Messdaten am jeweiligen Zeitpunkt.

Ein Ereignis kann durch eine Bewegung der Ladung ausgelöst und basierend auf Messdaten von mindestens einem Sensor registriert werden.

Nach einem weiteren Aspekt der Erfindung wird ein Steuergerät bereitgestellt, wobei das Steuergerät dazu eingerichtet ist, das Verfahren auszuführen. Das Steuergerät kann beispielsweise ein fahrzeugseitiges Steuergerät, ein fahrzeugexternes Steuergerät oder eine fahrzeugexterne Servereinheit, wie beispielsweise ein Cloud-System, sein.

Darüber hinaus wird nach einem Aspekt der Erfindung ein Computerprogramm bereitgestellt, welches Befehle umfasst, die bei der Ausführung des Computerprogramms durch einen Computer oder ein Steuergerät diesen veranlassen, das erfindungsgemäße Verfahren auszuführen.

Gemäß einem weiteren Aspekt der Erfindung wird ein maschinenlesbares Speichermedium bereitgestellt, auf dem das erfindungsgemäße Computerprogramm gespeichert ist.

Das Fahrzeug kann gemäß der BASt Norm assistiert, teilautomatisiert, hochautomatisiert und/oder vollautomatisiert bzw. fahrerlos betreibbar sein.

Das Fahrzeug kann beispielsweise als ein Personenkraftwagen, ein Lastkraftwagen, Sattelschlepper, Pritschenwagen, ein Robotaxi und dergleichen sein. Das Fahrzeug ist nicht auf einen Betrieb auf Straßen beschränkt. Vielmehr kann das Fahrzeug auch als ein Wasserfahrzeug, Luftfahrzeug, wie beispielsweise eine Transportdrohne, und dergleichen ausgestaltet sein. Erfindungsgemäß wird das Zeitintervall bei einem Überschreiten des Grenzwerts durch die Querbeschleunigung mit einem Startzeitpunkt mit einem zeitlichen Versatz von

$$t_0 = \sqrt{\frac{b_i}{a_y}}$$

und einen Endzeitpunkt von

$$t_{end} = \sqrt{3\frac{b_i}{a_y}}$$

eingeleitet.

Alternativ wird das Zeitintervall bei einem Überschreiten des Grenzwerts durch die Längsbeschleunigung mit einen Startzeitpunkt mit einem zeitlichen Versatz von

$$t_0 = \sqrt{\frac{l_i}{a_x}}$$

und einen Endzeitpunkt von

$$t_{end} = \sqrt{3\frac{l_i}{a_x}}$$

eingeleitet.

Dabei der zeitliche Versatz des Startzeitpunkts von der jeweiligen Beschleunigung in Querrichtung oder Längsrichtung und den Abmessungen des Laderaums des Fahrzeugs in die entsprechende Richtung ab. Somit ist eine Länge des Laderaums bei einer ermittelten Längsbeschleunigung relevant und eine Breite des Laderaums bei einer ermittelten Querbeschleunigung der Ladung.

Der Laderaum kann im Fahrzeug selbst, wie beispielsweise in einem Kofferraum oder einer Rücksitzbank, in einem Aufbau am Fahrzeug, an einem Dachgepäckträger bzw. einer Dachbox, in einem Anhänger, in einem Sattelauflieger und dergleichen positioniert sein.

Nach einer weiteren Ausführungsform werden die Ableitungen der Messdaten nach der Zeit durch mindestens einen Differentiator berechnet. Der Differentiator kann dabei in Form einer Hardware oder einer Software ausgestaltet sein. Die Messdaten werden dabei einem Eingang des Differentiators bzw. des Differentiator-Verstärkers zugeführt. Ein Ausgang des Differentiators liefert anschließend zeitliche Änderung bzw. Ableitungen der Messdaten nach der Zeit. Durch diese Maßnahme können Ereignisse während des gestarteten Zeitintervalls technisch einfach registriert werden.

Gemäß einem weiteren Ausführungsbeispiel werden während des gestarteten Zeitintervalls Messdaten von mindestens einem Beschleunigungssensor, Schallsensor, Sensor einer Luftfederung des Fahrzeugs, Mikrofon und/oder Wegsensor, beispielsweise einem Wegsensor einer Radaufhängung des Fahrzeugs, empfangen. Hierdurch erfolgt eine Prüfung der Ladungssicherung basierend auf Messdaten von unterschiedlichen Sensoren. Das Verfahren kann dadurch mithilfe von unterschiedlichsten Sensoren realisiert werden.

Nach einer weiteren Ausführungsform wird bei einem Erreichen der Mindestanzahl von gezählten Ereignissen, welche während des gestarteten Zeitintervalls gezählt werden, Steuerbefehle für eine Ausgabe einer Warnmeldung erzeugt. Durch diese Maßnahme kann ein Teleoperator des Fahrzeugs oder einer Fahrzeugflotte durch das Steuergerät benachrichtigt werden, wenn eine ungesicherte bzw. lose Ladung in mindestens einem Fahrzeug registriert wurde.

Die Warnmeldung kann mithilfe einer Kommunikationsverbindung übertragen werden. Die Kommunikationsverbindung kann beispielsweise auf einer drahtlosen Übertragungstechnologie basieren. Insbesondere kann die Warnmeldung mithilfe eines WLAN, UMTS, GSM, 5G, und dergleichen Übertragungsstandards versendet werden.

Gemäß einem weiteren Ausführungsbeispiel wird bei einem Erreichen der Mindestanzahl von gezählten Ereignissen, welche während des gestarteten Zeitintervalls gezählt werden, das Fahrzeug in einen sicheren Zustand überführt und/oder eine Fahrzeugdynamik verringert. Je nach Ausgestaltung des Fahrzeugs und der Ladung kann eine Verringerung der Fahrzeugdynamik bereits ausreichen, um einen sicheren Transport zu gewährleisten.

Ist die Ladung besonders empfindlich oder weist die Ladung eine gegenüber dem Fahrzeug hohe Masse auf, kann bei einer fehlenden Ladungssicherung das Überführen des Fahrzeugs in einen sicheren Zustand vorteilhaft sein, um eine Gefährdung im Straßenverkehr auszuschließen. Hierzu kann das Fahrzeug an einen Straßenrand abgestellt oder bis zu einem nächsten Parkplatz bzw. einer Raststätte gesteuert werden.

Ein in einen sicheren Zustand überführtes Fahrzeug mit einer ungesicherten Ladung kann anschließend inspiziert werden. Dabei kann die gelöste Ladung des Fahrzeugs manuell gesichert und eine Weiterfahrt des Fahrzeugs mit der Ladung gewährleistet werden.

Im Folgenden werden anhand von stark vereinfachten schematischen Darstellungen bevorzugte Ausführungsbeispiele der Erfindung näher erläutert.

Hierbei zeigen

Fig. 1 eine Draufsicht auf ein Fahrzeug mit einem Laderaum zum Veranschaulichen eines Verfahrens gemäß einer Ausführungsform und

Fig. 2 ein schematisches Ablaufdiagramm zum Veranschaulichen des Verfahrens gemäß einer Ausführungsform.

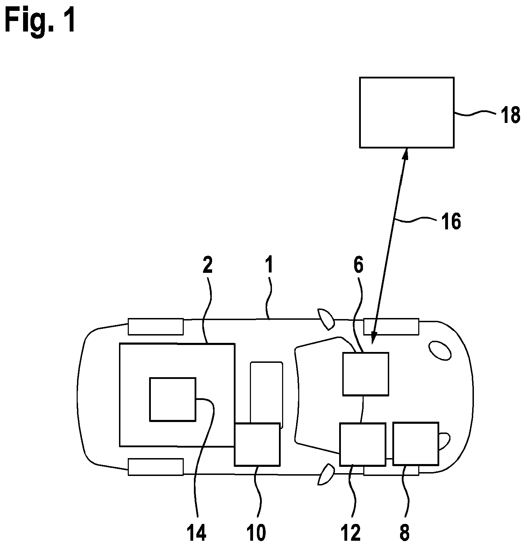

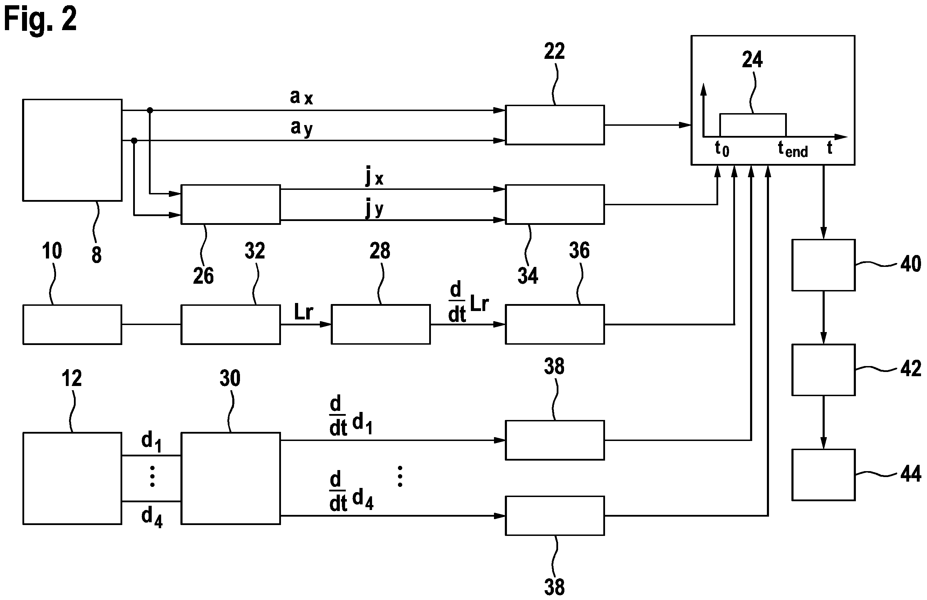

Die Figur 1 zeigt eine Draufsicht auf ein Fahrzeug 1 mit einem Laderaum 2 zum Veranschaulichen eines Verfahrens 4 gemäß einer Ausführungsform. Das Verfahren 4 wird in der Figur 2 näher erläutert.

Das Fahrzeug 1 weist ein Steuergerät 6 auf, welches Messdaten von unterschiedlichen Sensoren 8, 10, 12 empfangen und auswerten kann. Beispielsweise kann das Fahrzeug 1 einen Beschleunigungssensor 8 aufweisen, welcher Messdaten für eine initiale Überprüfung der Ladungssicherung herangezogen werden können. Der Beschleunigungssensor 8 kann beispielsweise im Chassis des Fahrzeugs 1 angeordnet sein.

Im Laderaum des Fahrzeugs 1 befindet sich beispielhaft ein Transportgut bzw. eine Ladung 14. Im dargestellten Ausführungsbeispiel ist der Laderaum 2 in Form einer Rücksitzbank oder eines Kofferraums des Fahrzeugs 1 ausgestaltet. Das Fahrzeug 1 kann gemäß der BASt Norm als ein vollautomatisiertes Fahrzeug ausgestaltet sein und somit ohne einen Fahrer betrieben werden.

Ein weiterer Sensor 10 kann beispielsweise als Mikrofon bzw. ein Innenraummikrophon ausgeführt sein. Darüber hinaus können Messdaten von als Wegsensoren ausgestalteten Sensoren 12 vom Steuergerät 6 empfangen werden.

Steuergerät 6 kann weiterhin eine Kommunikationsverbindung 16 zu einem Teleoperator 18 herstellen.

Im dargestellten Ausführungsbeispiel kann die Kommunikationsverbindung 16 in Form einer LTE- oder WLAN-Verbindung ausgestaltet sein. Insbesondere kann die Kommunikationsverbindung 16 zum empfangen von Weisungen oder zum Übermitteln von Warnmeldungen eingesetzt werden.

In der Figur 2 ist ein schematisches Ablaufdiagramm zum Veranschaulichen des Verfahrens 4 gemäß einer Ausführungsform dargestellt. Das Verfahren 4 dient zum Erkennen einer ungesicherten Ladung 14 in einem Fahrzeug 1 und kann vorzugsweise durch ein Steuergerät 6 durchgeführt werden.

Im Wesentlichen kann das Verfahren 4 in mehrere Abschnitte unterteilt werden. Dabei erfolgt in einem ersten Abschnitt ein Öffnen eines Zeitintervalls, in welchem Ereignisse gezählt werden.

Basierend auf den gezählten Ereignissen, welche während eines zweiten Abschnitts gesammelt werden, kann eine ungesicherte bzw. lose Ladung 14 detektiert werden.

Der dritte Abschnitt des Verfahrens 4 ist dazu eingerichtet, eine Reaktion auf eine ermittelte ungesicherte Ladung 14 zu erzeugen. Eine Reaktion kann beispielsweise in Form einer Warnmeldung und/oder durch ein Überführen des Fahrzeugs 1 in einen sicheren Zustand realisiert werden.

In einem ersten Schritt 20 werden von mindestens einem Beschleunigungssensor 8 ermittelte Messdaten in Form von Querbeschleunigungen $a_y$ und/oder Längsbeschleunigungen $a_x$ empfangen.

Die ermittelten Messdaten werden durch eine Grenzwerterkennung 22 mit einem vordefinierten Grenzwert verglichen. Der Grenzwert kann im Rahmen einer Kalibrierung im Vorfeld definiert werden.

Bei einem Überschreiten eines Grenzwerts durch die gemessenen Querbeschleunigungen $a_y$ und/oder Längsbeschleunigungen $a_x$ wird im Rahmen eines Ereigniszählzeitraums ein Zeitintervall 24 zum Erkennen der ungesicherten Ladung 14 gestartet.

Der Grenzwert kann beispielsweise durch einen Stoß der ungesicherten Ladung 14 gegen den Laderaum 2 des Fahrzeugs 1 überschritten werden. Das Zeitintervall 24 kann einen unmittelbaren Startzeitpunkt oder einen zeitlich verzögerten Startzeitpunkt $t_0$ aufweisen. Entsprechend kann das Zeitintervall 24 einen angepassten Endzeitpunkt $t_{end}$ aufweisen.

Der Startzeitpunkt $t_0$ und der Endzeitpunkt $t_{end}$ lassen sich dabei gemäß den folgenden Formeln berechnen:

$$t_0 = \sqrt{\frac{b_i}{a_y}} \text{ und } t_{end} = \sqrt{3\frac{b_i}{a_y}}$$

, falls die Querbeschleunigung $a_y$ den Grenzwert überschritten hat.

$$t_0 = \sqrt{\frac{l_i}{a_x}} \text{ und } t_{end} = \sqrt{3\frac{l_i}{a_x}}$$

, falls die Längsbeschleunigung $a_x$ den Grenzwert überschritten hat. Dabei entspricht $b_i$ einer Breite des Laderaums 2 und $l_i$ einer Länge des Laderaums 2.

Beispielsweise kann sich in der Mitte des Ereigniszählfensters bzw. des Zeitintervalls 24 der Zeitpunkt, zu dem ein loser Gegenstand bzw. die Ladung 14 bei einer anliegenden Querbeschleunigung $a_y$ von einer linken zu einer rechten Innenraumseite des Laderaums 2 verrutschen und dort auf die Wand treffen.

Während des gestarteten Zeitintervalls 24 werden von mindestens einem Sensor 8, 10, 12 ermittelte Messdaten empfangen und zeitliche Änderungen bzw. zeitliche Ableitungen 26, 28, 30 der empfangenen Messdaten berechnet. Dies kann durch mehrere Differentiator-Verstärker 26, 28, 30 umgesetzt werden, welche beispielsweise in das Steuergerät 6 integriert sind.

Jeder Sensor 8, 10, 12 kann dabei einen separaten Differentiator-Verstärker 26, 28, 30 aufweisen, welcher die entsprechenden Messdaten in Ableitungen der Messdaten nach der Zeit transformiert.

Es werden Messdaten von mehreren Wegsensoren 12 der Radaufhängung ausgewertet. Beispielsweise kann jede der vier Radaufhängungen einen eigenen Wegsensor 12 aufweisen. Die jeweiligen Wegsensoren 12 können Messdaten in Form von Wegen bzw. Strecken $d_1$, $d_2$, $d_3$, $d_4$ ermitteln.

Das mindestens eine Innenraummikrophon 10 kann Messdaten in Form von Schallsignalen ermitteln, welche durch eine Schalldruckpegelberechnung 32 in Schalldruckpegel $L_p$ gewandelt werden.

Die jeweiligen zeitlichen Messdaten werden anschließend während des aktiven Zeitintervalls 24 zeitlich abgeleitet 26, 28, 30. Durch die Ableitung 26 der Querbeschleunigungen $a_y$ und/oder Längsbeschleunigungen $a_x$ nach der Zeit entstehen ein Ruck $j_y$ in Querrichtung und/oder ein Ruck $j_x$ in Längsrichtung.

Anschließend werden die Ableitungen der Messdaten nach der Zeit einer Schwellwerterkennung 34, 36, 38 unterzogen. Bei einem Überschreiten der Ableitungen der empfangenen Messdaten nach der Zeit eines Schwellwerts wird ein Ereignis gezählt.

Das Zählen der Ereignisse kann durch einen Ereigniszähler 40 erfolgen, welcher während des Zeitintervalls 24 aktiv ist.

Eine ungesicherte Ladung wird erkannt, wenn eine Mindestanzahl 42 von gezählten Ereignissen erreicht wird, welche während des gestarteten Zeitintervalls 24 gezählt werden.

Wird eine ungesicherte Ladung erkannt, kann eine Reaktion 44 durch das Steuergerät 6 veranlasst werden. Hierzu kann das Steuergerät 6 Steuerbefehle erzeugen, welche eine Warnmeldung generieren oder welche das Fahrzeug 1 in einen sicheren Zustand versetzen können.

**Patentansprüche**

1. Verfahren zum Erkennen einer ungesicherten Ladung (14) in einem, insbesondere automatisiert betreibbaren, Fahrzeug (1) durch ein Steuergerät (6), wobei

- von mindestens einem Beschleunigungssensor (8) ermittelte Messdaten in Form von Querbeschleunigungen und/oder Längsbeschleunigungen des Fahrzeugs (1) empfangen werden,
- bei einem Überschreiten eines Grenzwerts durch die gemessenen Querbeschleunigungen oder Längsbeschleunigungen ein Zeitintervall (24) zum Erkennen der ungesicherten Ladung (14) gestartet wird,
- während des gestarteten Zeitintervalls (24) von mindestens einem Sensor (8, 10,12) ermittelte Messdaten empfangen und Ableitungen der empfangenen Messdaten nach der Zeit berechnet werden,
- bei einem Überschreiten der eines Schwellwerts durch die Ableitungen der empfangenen Messdaten nach der Zeit ein Ereignis gezählt wird,
- eine ungesicherte Ladung (14) erkannt wird, wenn eine Mindestanzahl von gezählten Ereignissen erreicht wird, welche während des gestarteten Zeitintervalls (24) gezählt werden,

wobei das Zeitintervall (24) bei einem Überschreiten des Grenzwerts durch die Querbeschleunigung einen Startzeitpunkt mit einem zeitlichen Versatz von

$$t_0 = \sqrt{\frac{b_i}{a_y}}$$

und einen Endzeitpunkt von

$$t_{end} = \sqrt{3\frac{b_i}{a_y}}$$

aufweist, oder bei einem Überschreiten des Grenzwerts durch die Längsbeschleunigung einen Startzeitpunkt mit einem zeitlichen Versatz von

$$t_0 = \sqrt{\frac{l_i}{a_x}}$$

und einen Endzeitpunkt von

$$t_{end} = \sqrt{3\frac{l_i}{a_x}}$$

aufweist, mit l einer Länge eines Laderaums (2) und b einer Breite des Laderaums (2) des Fahrzeugs (1).

2. Verfahren nach Anspruch 1, wobei die Ableitungen der Messdaten nach der Zeit durch mindestens einen Differentiator berechnet werden.

3. Verfahren nach einem der Ansprüche 1 oder 2, wobei während des gestarteten Zeitintervalls (24) Messdaten von mindestens einem Beschleunigungssensor (8), Schallsensor, Mikrofon (10) und/oder Wegsensor (12), beispielsweise einem Wegsensor einer Radaufhängung des Fahrzeugs (1), empfangen werden.

4. Verfahren nach einem der Ansprüche 1 bis 3, wobei bei einem Erreichen der Mindestanzahl von gezählten Ereignissen, welche während des gestarteten Zeitintervalls (24) gezählt werden, Steuerbefehle für eine Ausgabe einer Warnmeldung erzeugt werden.

5. Verfahren nach einem der Ansprüche 1 bis 4, wobei bei einem Erreichen der Mindestanzahl von gezählten Ereignissen, welche während des gestarteten Zeitintervalls (24) gezählt werden, das Fahrzeug (1) in einen sicheren Zustand überführt und/oder eine Fahrzeugdynamik verringert wird.

6. Steuergerät (6), wobei das Steuergerät (6) dazu eingerichtet ist, das Verfahren (4) gemäß einem der Ansprüche 1 bis 5 auszuführen.

7. Computerprogramm, welches Befehle umfasst, die bei der Ausführung des Computerprogramms durch einen Computer oder ein Steuergerät (6) diesen veranlassen, das Verfahren (4) gemäß einem der Ansprüche 1 bis 5 auszuführen.

8. Maschinenlesbares Speichermedium, auf welchem das Computerprogramm gemäß Anspruch 7 gespeichert ist.

**Claims**

1. Method for detecting an unsecured load (14) in an, in particular automatically operable, vehicle (1), by means of a control unit (6), wherein

   - measurement data in the form of lateral accelerations and/or longitudinal accelerations of the vehicle (1) acquired by at least one acceleration sensor (8) are received,
   - a time interval (24) for detecting the unsecured load (14) is started when the measured lateral accelerations or longitudinal accelerations exceed a limit value,
   - during the started time interval (24), measurement data acquired by at least one sensor (8, 10, 12) are received and derivatives of the received measurement data with respect to time are calculated,
   - an event is counted when the derivatives of the received measurement data with respect to time exceed the one threshold value,
   - an unsecured load (14) is detected when a minimum number of counted events that are counted during the started time interval (24) is reached,

   wherein, when the lateral acceleration exceeds the limit value, the time interval (24) has a start time with

   $$t_0 = \sqrt{\frac{b_i}{a_y}}$$

   a time offset of and an end time of $t_{end}$

   $$= \sqrt{3\frac{b_i}{a_y}}$$

   or, when the longitudinal acceleration exceeds the limit value, said time interval has a start

   $$t_0 = \sqrt{\frac{l_i}{a_x}}$$

   time with a time offset of and an end

   $$t_{end} = \sqrt{3\frac{l_i}{a_x}}$$

   time of , wherein l is a length of a cargo compartment (2) and b is a width of the cargo compartment (2) of the vehicle (1).

2. Method according to Claim 1, wherein the derivatives of the measurement data with respect to time are calculated by means of at least one differentiator.

3. Method according to either of Claims 1 and 2, wherein measurement data from at least one acceleration sensor (8), sound sensor, microphone (10) and/or position sensor (12), for example a position sensor of a wheel suspension system of the vehicle (1), are received during the started time interval (24).

4. Method according to any of Claims 1 to 3, wherein control commands for issuing a warning message are generated when the minimum number of counted events that are counted during the started time interval (24) is reached.

5. Method according to any of Claims 1 to 4, wherein the vehicle (1) is transferred to a safe state and/or vehicle dynamics are reduced when the minimum number of counted events that are counted during the started time interval (24) is reached.

6. Control unit (6), wherein the control unit (6) is designed to carry out the method (4) according to any of Claims 1 to 5.

7. Computer program comprising instructions which, when the computer program is executed by a computer or a control unit (6), cause same to carry out the method (4) according to any of Claims 1 to 5.

8. Machine-readable storage medium on which the computer program according to Claim 7 is stored.

**Revendications**

1. Procédé de reconnaissance, par un contrôleur (6), d'un chargement (14) non sécurisé dans un véhicule (1) pouvant notamment être exploité de manière automatisée,

   - des données de mesure déterminées par au moins un capteur d'accélération (8) étant reçues sous la forme d'accélérations transversales et/ou d'accélérations longitudinales du véhicule (1),

- en cas de dépassement d'une valeur limite par les accélérations transversales ou les accélérations longitudinales mesurées, un intervalle de temps (24) étant démarré pour la reconnaissance du chargement (14) non sécurisé,

- pendant l'intervalle de temps (24) démarré, des données de mesure déterminées par au moins un capteur (8, 10, 12) étant reçues et des dérivées des données de mesure reçues étant calculées en fonction du temps,

- en cas de dépassement d'une valeur de seuil par les dérivées des données de mesure reçues en fonction du temps, un événement étant compté,

- un chargement (14) non sécurisé étant reconnu lorsqu'un nombre minimal d'événements comptés est atteint, lesquels sont comptés pendant l'intervalle de temps (24) démarré,

l'intervalle de temps (24) présentant, en cas de dépassement de la valeur limite par l'accélération transversale, un instant de début avec un décalage temporel de $t_0 = \sqrt{\dfrac{b_i}{a_y}}$ et un instant de fin

$t_{end} = \sqrt{3\dfrac{b_i}{a_y}}$ ou, en cas de dépassement de la valeur limite par l'accélération longitudinale, présentant un instant de début avec un décalage temporel de $t_0 = \sqrt{\dfrac{l_i}{a_x}}$ et un instant de fin $t_{end} = \sqrt{3\dfrac{l_i}{a_x}}$,

avec l désignant une longueur d'un espace de chargement (2) et b une largeur de l'espace de chargement (2) du véhicule (1).

2. Procédé selon la revendication 1, les dérivées des données de mesure en fonction du temps étant calculées par au moins un différentiateur.

3. Procédé selon l'une des revendications 1 ou 2, des données de mesure étant reçues pendant l'intervalle de temps (24) démarré en provenance d'au moins un capteur d'accélération (8), un capteur acoustique, un microphone (10) et/ou un capteur de déplacement (12), par exemple un capteur de déplacement d'une suspension de roue du véhicule (1).

4. Procédé selon l'une des revendications 1 à 3, des instructions de commande étant générées pour une émission d'un message d'alerte lorsque le nombre minimal d'événements comptés pendant l'intervalle de temps (24) démarré est atteint.

5. Procédé selon l'une des revendications 1 à 4, le véhicule (1) étant transféré dans un état sûr et/ou une dynamique du véhicule étant réduite lorsque le nombre minimal d'événements comptés est atteint, lesquels sont comptés pendant l'intervalle de temps (24) démarré.

6. Contrôleur (6), le contrôleur (6) étant conçu pour mettre en œuvre le procédé (4) selon l'une des revendications 1 à 5.

7. Programme informatique, lequel comprend des instructions qui, lors de l'exécution du programme informatique par un ordinateur ou un contrôleur (6), amènent celui-ci à mettre en œuvre le procédé (4) selon l'une des revendications 1 à 5.

8. Support de stockage lisible par machine sur lequel est stocké le programme informatique selon la revendication 7.

# Fig. 1

# Fig. 2

EP 4 185 486 B1

**IN DER BESCHREIBUNG AUFGEFÜHRTE DOKUMENTE**

**In der Beschreibung aufgeführte Patentdokumente**

- DE 102014226108 A1
- DE 102017212596 A1
- DE 102018115615 A1
- US 8786437 B2